(19) Europäisches Patentamt
European Patent Office
Office européen des brevets

(11) **EP 4 632 434 A1**

(12) **EUROPEAN PATENT APPLICATION**
published in accordance with Art. 153(4) EPC

(43) Date of publication:
**15.10.2025 Bulletin 2025/42**

(21) Application number: **23901983.9**

(22) Date of filing: **21.04.2023**

(51) International Patent Classification (IPC):
**G01S 17/89** (2020.01)   **G01S 17/93** (2020.01)
**G06V 20/64** (2022.01)

(52) Cooperative Patent Classification (CPC):
**G01S 17/89; G01S 17/93; G06V 20/64**

(86) International application number:
**PCT/CN2023/089946**

(87) International publication number:
**WO 2024/124769 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022   CN 202211607434**

(71) Applicant: **Zoomlion Heavy Industry Science and
Technology Co., Ltd.
Changsha, Hunan 410013 (CN)**

(72) Inventors:
• **TAN, Zhiren
Changsha, Hunan 410013 (CN)**

• **FU, Ling
Changsha, Hunan 410013 (CN)**
• **YU, Xiaoying
Changsha, Hunan 410013 (CN)**
• **HE, Yuyang
Changsha, Hunan 410013 (CN)**
• **LI, Qiyang
Changsha, Hunan 410013 (CN)**
• **GUO, Jimei
Changsha, Hunan 410013 (CN)**
• **WU, Hong
Changsha, Hunan 410013 (CN)**

(74) Representative: **Petraz, Gilberto Luigi et al
GLP S.r.l.
Viale Europa Unita, 171
33100 Udine (IT)**

(54) **ANTI-COLLISION DETECTION METHOD FOR CANTILEVER CRANE, AND ELECTRONIC
DEVICE AND MULTI-CANTILEVER-CRANE DEVICE**

(57)    An anti-collision detection method for a cantilever crane. The method comprises : acquiring first point cloud data of a surrounding environment of a multi-cantilever-crane device (S1); detecting obstacles in the surrounding environment according to the first point cloud data, and establishing first circumscribed bounding boxes of the obstacles (S2); performing first collision detection according to the first circumscribed bounding boxes and second circumscribed bounding boxes of cantilever cranes in the multi-cantilever-crane device (S3); when a result of the first collision detection indicates the presence of a first obstacle and a first cantilever crane, which collide with each other, performing, on the basis of point cloud data corresponding to the first obstacle in the first point cloud data, second collision detection in a coordinate system corresponding to the first cantilever crane (S4); and when a result of the second collision detection indicates that the first obstacle collides with the first cantilever crane, generating anti-collision alarm information where the second collision detection result indicates that the first obstacle has collided with the first boom (S5).

FIG. 1

# Description

The present application claims the benefit of priority to Chinese Patent Application No. 202211607434.9, filed with the China National Intellectual Property Administration on December 14, 2022 and entitled " ANTI-COLLISION DETECTION METHOD FOR CANTLEVER CRANE.AND ELECTRONIC DEVICE AND MULTI-CANTILEVER-CRANE DEVTCE ", the entire content of which is incorporated herein by reference.

## TECHNICAL FIELD

The present application relates to the field of automatic control technology, and in particular to a boom anti-collision detection method, an electronic device, and a multi-boom device.

## BACKGROUND

For multi-joint boom engineering equipment such as pump trucks and truck cranes, the current operation mainly relies on the coordinated efforts of multiple relevant personnel to adjust the boom. This type of equipment features long booms with variable postures and is mostly used for high-altitude operations. When the surrounding obstacles are observed with the naked eye, the limited range of human vision makes it difficult to fully observe obstacles around the entire boom. As a result, collisions between the boom and obstacles may occur during adjustment, leading to safety accidents.

## SUMMARY

Based on the above, it is necessary to provide a boom anti-collision detection method, an electronic device, and a multi-boom device for the above technical problems, which can automatically perform collision detection. After performing primary collision detection based on point cloud data of the surrounding environment, a secondary collision detection is performed based on point cloud data of obstacles with collisions, so that the detection result is more accurate.

To achieve the above objective, the technical solution of the present application is implemented as follows:

a boom anti-collision detection method applied to a multi-boom device, the method including:

S1, obtaining first point cloud data of a surrounding environment of the multi-boom device;
S2, detecting an obstacle in the surrounding environment based on the first point cloud data and establishing a first bounding box for the obstacle;
S3, performing first collision detection based on the first bounding box and a second bounding box of the boom of the multi-boom device;

S4, performing second collision detection based on second point cloud data within a coordinate system corresponding to the first boom where a result of the first collision detection indicates a collision between a first obstacle and a first boom, in which the obstacles in the surrounding environment include the first obstacle, the multi-boom device includes the first boom, and the second point cloud data is the point cloud data corresponding to the first obstacle in the first point cloud data; and
S5, generating anti-collision alarm information when the second collision detection indicates that the first obstacle has collided with the first boom.

Optionally, in S4, the performing second collision detection based on second point cloud data within a coordinate system corresponding to the first boom, the method includes:

performing voxel partitioning on a three-dimensional point cloud corresponding to the second point cloud data;
establishing a plurality of third bounding boxes corresponding to the first obstacle based on the result of the voxel partitioning; and
performing the second collision detection based on coordinates of the third bounding boxes within the coordinate system corresponding to the first boom.

Optionally, in S3, the performing first collision detection based on the first bounding box and a second bounding box of the boom of the multi-boom device, the method includes:
performing the first collision detection within a coordinate system of the multi-boom device based on the first bounding box and the second bounding box.

Optionally, after S2, the detecting an obstacle in the surrounding environment based on the first point cloud data and establishing the first bounding box for the obstacle, the method includes:
planning an obstacle-avoidance path based on the first bounding box.

Optionally, the second bounding box includes a first sub-bounding box of a coordinate system corresponding to the multi-boom device and a second sub-bounding box of the coordinate system corresponding to the first boom; and

in S3, the performing first collision detection based on the first bounding box and a second bounding box of the boom of the multi-boom device, the method includes:
determining whether the first bounding box intersects with the first sub-bounding box;
if the first bounding box does not intersect with the first sub-bounding box, the result of the first collision detection indicates no collision between the first obstacle and the first boom;

if the first bounding box intersects with the first sub-bounding box, determine whether a collision condition is met based on a distance between the first bounding box and the second sub-bounding box;

if the collision condition is met, a collision between the first obstacle and the first boom is determined, and the result of the first collision detection indicates a collision between the first obstacle and the first boom; and

if the collision condition is not met, the result of the first collision detection indicates no collision between the first obstacle and the first boom.

Optionally, in S1, the obtaining first point cloud data of a surrounding environment of the multi-boom device, the method includes:

obtaining point cloud data corresponding to a left side of the boom from LiDAR (Light Detection and Ranging) data as the first point cloud data when the multi-boom device rotates to the left;

obtaining point cloud data corresponding to a right side of the boom from LiDAR data as the first point cloud data when the multi-boom device rotates to the right; and

obtaining point cloud data within a preset range around a central axis of the boom from LiDAR data as the first point cloud data when the multi-boom device undergoes luffing motion.

Optionally, in S2, the detecting an obstacle in the surrounding environment based on the first point cloud data and establishing the first bounding box for the obstacle, the method includes:

performing voxel partitioning on the three-dimensional point cloud corresponding to the first point cloud data to establish a plurality of first voxel spaces; and

performing clustering analysis on the point cloud within the first voxel spaces to detect the obstacle in the surrounding environment and determine a first bounding box for the obstacle.

The present application further provides an electronic device, including a processor, a memory, and a computer program stored in the memory and executable by the processor, in which the computer program, when executed by the processor, implements the steps of any of the methods described above.

The present application further provides a multi-boom device, including a LiDAR and a controller, in which the LiDAR is configured to collect data to obtain the first point cloud data, and the controller, when executing a computer program, implements the steps of any of the methods described above.

The present application further provides a computer-readable storage medium, in which the computer-readable storage medium stores a computer program for executing and implementing the steps of any of the methods described above.

Based on the above, the present application discloses a boom anti-collision detection method, including: obtaining first point cloud data of a surrounding environment of a multi-boom device; detecting an obstacle in the surrounding environment based on the first point cloud data and establishing a first bounding box for the obstacle; performing first collision detection based on the first bounding box and a second bounding box of the boom of the multi-boom device; performing, when the first collision detection result indicates a collision between a first obstacle and a first boom, second collision detection based on point cloud data corresponding to the first obstacle in the first point cloud data within a coordinate system corresponding to the first boom; and generating anti-collision alarm information when a result of the second collision detection indicates a collision between the first obstacle and the first boom. The present application can automatically perform collision detection. After performing a primary collision detection based on point cloud data of the surrounding environment, a secondary collision detection is performed based on the point cloud data of obstacles with collisions, so that the detection result is more accurate.

## BRIEF DESCRIPTION OF DRAWINGS

FIG. 1 is a schematic flowchart of a boom anti-collision detection method provided by the present application.

FIG. 2 is another schematic flowchart of a boom anti-collision detection method provided by the present application.

FIG. 3 is a schematic diagram of a structure of a multi-boom device provided by the present application.

FIG. 4 is a schematic diagram of hardware layout on a multi-boom device provided by the present application.

## DESCRIPTION OF THE EMBODIMENTS

Specific embodiments of the present application will be described in detail below with reference to the drawings. It should be understood that the described embodiments are merely part of the embodiments of the present application, rather than all embodiments. All other embodiments derived by one of ordinary skill in the art based on the description of the present application without creative efforts shall fall within the scope of protection of the present application.

In the description of the present application, unless explicitly specified and limited, the terms "provided", "installed", "connected", and the like shall be understood in a broad sense. For example, the connection may be a fixed connection, or a detachable connection, or an integral connection; it may be a mechanical connection or an electrical connection; and it may be a direct connection or an indirect connection via an intermediate medium. One of ordinary skill in the art can interpret the specific meanings of the above terms in specific contexts.

The terms "first", "second", "third", and the like are only to distinguish values or elements with similar attributes, and do not indicate or imply relative importance or a specific order.

The terms "comprise", "include" or any other variations thereof are intended to cover non-exclusive inclusions. That is in addition to those elements listed, other elements not explicitly listed may also be included.

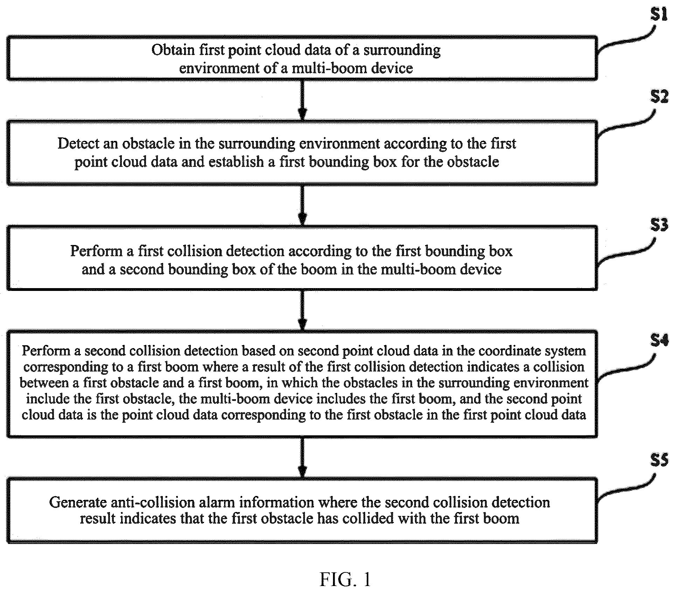

FIG. 1 is a schematic flowchart of a boom anti-collision detection method provided by the present application. As shown in FIG. 1, a boom anti-collision detection method applied to a multi-boom device includes:

S1, obtaining first point cloud data of a surrounding environment of a multi-boom device;
S2, detecting an obstacle in the surrounding environment based on the first point cloud data and establishing a first bounding box for the obstacle;
S3, performing first collision detection based on the first bounding box and a second bounding box of the boom of the multi-boom device;
S4, performing second collision detection based on second point cloud data within a coordinate system corresponding to the first boom where a result of the first collision detection indicates a collision between a first obstacle and a first boom, in which the obstacles in the surrounding environment include the first obstacle, the multi-boom device includes a first boom, and the second point cloud data is the point cloud data corresponding to the first obstacle in the first point cloud data; and
S5, generating anti-collision alarm information when the second collision detection indicates that the first obstacle has collided with the first boom.

Through the above approach, the present application can automatically perform collision detection. First, perform a primary collision detection based on the point cloud data of the surrounding environment, and then perform a secondary collision detection based on the point cloud data of the obstacle identified as having a potential collision. This hierarchical detection approach, including both coarse and fine detection, results in higher detection accuracy and more reliable outcomes.

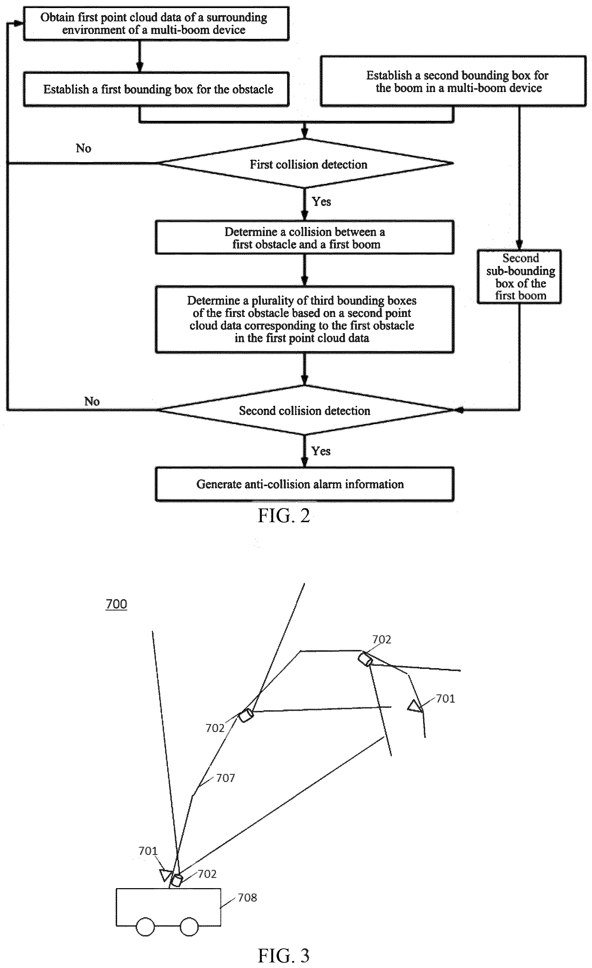

The boom anti-collision detection method of this embodiment is described below with reference to FIG. 1 and FIG. 2.

In S1, LiDAR is used to collect data to obtain the first point cloud data. Referring to FIG. 3, a plurality of LiDAR sensors 702 can be installed at a plurality of key positions on a multi-section boom 707 of a pump truck. For example, when the boom includes six sections, the LiDAR sensors can be installed at the 1st, 3rd, and 5th boom sections, thereby ensuring full coverage of the boom sensing area under typical working conditions while minimizing the number of LiDAR sensors and effectively reducing costs. It should be understood that in other embodiments, the LiDAR sensors can alternatively be installed at the 2nd, 4th, and 6th boom sections.

Optionally, in S1, the obtaining first point cloud data of a surrounding environment of a multi-boom device, the method includes:

obtaining point cloud data corresponding to a left side of the boom from LiDAR data as the first point cloud data when the multi-boom device rotates to the left;
obtaining point cloud data corresponding to a right side of the boom from LiDAR data as the first point cloud data when the multi-boom device rotates to the right; and
obtaining point cloud data within a preset range around a central axis of the boom from LiDAR data as the first point cloud data when the multi-boom device undergoes luffing motion.

In this way, an effective data collection strategy for the LiDAR can be formulated based on the working conditions of the boom, enabling the obtaining of valid obstacle detection regions of interest and improving computational efficiency. The preset range around the central axis of the boom can be defined as a range of [-n, n] meters around the central axis of the boom, where n is in a range of 0.1-5 meters, preferably, n is 1 meter. For example, when n is 1 meter, the current detection region of interest is a cylindrical area centered on the central axis of the boom with a radius of 1 meter.

Optionally, in S2, the detecting an obstacle in the surrounding environment based on the first point cloud data and establishing a first bounding box for the obstacle, the method includes:

performing voxel partitioning on the three-dimensional point cloud corresponding to the first point cloud data to establish a plurality of first voxel spaces; and
performing clustering analysis on the point cloud within the first voxel spaces to detect the obstacle in the surrounding environment and determine a first bounding box for the obstacle.

Specifically, voxel partitioning is performed on the three-dimensional point cloud corresponding to the first point cloud data along the x-axis or y-axis, with a partitioning interval as a first preset distance. In this embodiment, the first preset distance is 1 meter, thereby forming W first voxel spaces (W=X/s or Y/s, where X and Y represent the side lengths of the three-dimensional point cloud corresponding to the first point cloud data along the X-axis and Y-axis). In other embodiments, the three-dimensional direction can alternatively be defined using cylindrical coordinates.

Clustering analysis is performed on the point cloud within each first voxel space to detect obstacles in the surrounding environment, and the covariance matrix of each cluster is calculated to derive the corresponding eigenvalues and eigenvectors. The coordinate points are projected onto direction vectors, and maximum and minimum values of the x, y, and z components in each direction are determined to construct a minimum bounding box for the obstacle, that is, the "first bounding box".

Optionally, the second bounding box includes a first sub-bounding box of a coordinate system corresponding to the multi-boom device and a second sub-bounding box of the coordinate system corresponding to the first boom. Specifically, a pump truck boom is divided into two-levels bounding spheres. Primary bounding sphere is a spherical space centered at a boom center of the multi-boom device with a radius equal to a distance from the center to the farthest point of the boom, that is, the "first sub-bounding box", and secondary bounding sphere is a spherical space formed by a single boom section, that is, the "second sub-bounding box".

Referring to FIG. 1 and FIG. 2, optionally, in S3, the performing the first collision detection based on the first bounding box and the second bounding box, the method includes:

performing the first collision detection within the coordinate system of the multi-boom device based on the first bounding box and the second bounding box.

Wherein, a coordinate system of the first bounding box of the obstacle and a coordinate system of the pump truck boom are unified into the coordinate system of the multi-boom device, so that the first collision detection can be performed within the coordinate system of the multi-boom device based on the first bounding box and the second bounding box. During detection, a first sub-bounding box is regarded as a maximum detection space for collision detection. In the coordinate system of the multi-boom device, each detected first bounding box is regarded as an independent obstacle perception object, and is compared with each second sub-bounding box for first collision detection to determine whether there is a collision between any obstacle and a boom.

Optionally, in S3, the performing first collision detection based on the first bounding box and a second bounding box of the boom of the multi-boom device, the method includes:

determining whether the first bounding box intersects with the first sub-bounding box;
if the first bounding box does not intersect with the first sub-bounding box, the result of the first collision detection indicates that no collision occurs between the first obstacle and the first boom;
if the first bounding box intersects with the first sub-bounding box, determining whether a collision condition is met based on a distance between the first bounding box and the second sub-bounding box;
if the collision condition is met, the first obstacle and the first boom involved in the collision are determined, and the result of the first collision detection indicates a collision between the first obstacle and the first boom; and
if the collision condition is not met, the result of the first collision detection indicates that no collision occurs between the first obstacle and first boom.

Wherein, a minimum value of the distance between the first bounding box and the second sub-bounding box can be taken to determine whether the value falls within the collision range. If the minimum value falls within the collision range, the collision condition is met, indicating a collision between the first obstacle and the first boom. Otherwise, the collision condition is not met, and no collision occurs between the first obstacle and the first boom.

Wherein, if the result of the first collision detection indicates a collision between the first obstacle and the first boom, second collision detection is further performed to achieve a more accurate anti-collision detection and to more precisely determine whether there is an actual risk of collision.

Referring to FIG. 1 and FIG. 2, optionally, in S4, the performing second collision detection based on the second point cloud data within a coordinate system corresponding to the first boom, the method includes:

performing voxel partitioning on three-dimensional point cloud corresponding to the second point cloud data;
establishing a plurality of third bounding boxes corresponding to the first obstacle based on the result of the voxel partitioning; and
performing the second collision detection based on the coordinates of the third bounding boxes in the coordinate system corresponding to the first boom.

Specifically, voxel partitioning is performed on the three-dimensional point cloud corresponding to the second point cloud data along the three axes of x-axis, y-axis, and z-axis, with a partitioning interval is a second preset distance. The second preset distance is less than the first preset distance. In this embodiment, the second preset distance is 0.05-0.3 meters, preferably 0.1 meters. Therefore, W*M*N second voxel spaces are formed (where W=X/s, M=Y/s, N=Z/s, and X, Y, and Z represent the side lengths of the three-dimensional point cloud corresponding to the second point cloud data along the x-axis, y-axis, and z-axis). In other embodiments, the three-dimensional direction can alternatively be defined using cylindrical coordinates.

Afterwards, clustering analysis is performed on the point cloud within each second voxel space to detect obstacles therein, and the covariance matrix of each cluster is calculated to derive the corresponding eigenvalues and eigenvectors. The coordinate points are then projected onto the direction vectors, and maximum and minimum values of the x, y, and z components in each direction are determined to construct a plurality of minimum bounding boxes for the first obstacle, that is, the "third bounding box". In this way, when an irregularly shaped first obstacle is present, the first obstacle is represented by the plurality of minimum bounding boxes, thereby further improving detection accuracy compared to the first collision detection.

Next, a coordinate system of the third bounding box is unified into a coordinate system corresponding to the first boom to perform the second collision detection. Compared with the coarse-level detection where unification is performed in a truck coordinate system, intermediate coordinate transformations are reduced and the error is minimized.

Referring to FIG. 1 and FIG. 2, when performing the second collision detection, a minimum value of the distance between the third bounding box and the second sub-bounding box can be taken to determine whether the minimum value falls within the alarm range. If the minimum value falls within the alarm range, indicating that the first obstacle may collide with the first boom, anti-collision alarm information is generated. Otherwise, indicating that the first obstacle will not collide with the first boom, no anti-collision alarm information is generated.

It should be noted that the first collision detection and the second collision detection can be performed in real-time during the boom's movement, or after the boom has stopped moving. Alternatively, the first collision detection is performed in real-time during the boom's movement, and the second collision detection is performed after the boom has stopped moving, so as to ensure both the efficiency and safety of boom control.

Optionally, after S2, the detecting an obstacle in the surrounding environment based on the first point cloud data and establishing a first bounding box for the obstacle, the method includes:

planning an obstacle-avoidance path based on the first bounding box.

Wherein, when the result of the first collision detection indicates a collision between the first obstacle and the first boom, obstacle avoidance path planning is performed based on the first bounding box. Specifically, each detected first bounding box is regarded as an independent obstacle perception object and participates in real-time dynamic obstacle avoidance path planning of the boom, so as to generate an optimal obstacle avoidance route, and perform obstacle avoidance control. In this way, by using the first bounding box as the perception object, more comprehensive obstacle avoidance can be achieved.

The present application achieves anti-collision detection, alarm generation, and obstacle avoidance between unknown obstacles and the boom in the surrounding space through an active anti-collision detection technology for multi-joint booms. The entire process requires no manual intervention, thereby improving the level of device intelligence and meeting the requirements of digitalized construction.

Furthermore, in order to better realize automatic control of the boom such that the boom's pose aligns with the LiDAR acquisition area that covers the entire boom space and also meets optimal working conditions, a boom motion model can be trained using the Deep Deterministic Policy Gradient (DDPG) algorithm. During training, a reward and punishment mechanism associated with motion parameters such as boom's pose, position, and number of articulating boom sections, is applied to enable the model to recommend boom motions to meet the needs of reasonable boom movement and/or achieve the desired state.

Specifically, a method for training a boom motion model includes: creating an Actor network and a Critic network; interacting with an environment through the Actor network to determine a second state reached by the boom after taking a first action in a first state and a reward value obtained, where a preset reward and punishment strategy used for the reward value includes a reward and punishment mechanism associated with at least one of the target pose of the boom, the target position of a boom end, and the number of articulating boom sections of the boom; storing the first state, the first action, the reward value, and the second state in a training database; and training the Actor network and the Critic network to obtain a trained boom motion model.

Optionally, the interacting with the environment through the Actor network to determine the second state reached by the boom after taking the first action in the first state and the reward value obtained, where the preset reward and punishment strategy used for the reward value includes the reward and punishment mechanism associated with at least one of the target pose of the boom, the target position of the boom end, and the number of articulating boom sections, includes:

interacting with the environment through the Actor network to determine the second state reached by the boom after taking the first action in the first state; determining a boom end position based on the second state; obtaining a value of a distance between the boom end position and the target position of the boom end; determining the boom pose based on the second state; determining the number of articulating boom sections based on the first action; and determining the reward value based on the preset reward and punishment strategy, where the reward is defined as:

$$Reward = r + r_1 + r_2 + r_3,$$

where *Reward* is the reward value; r is an initial value, which is set as a negative value of the value of the distance; $r_1$ is a reward and punishment value associated with the boom end position; if the value of the distance is within a preset range, $r_1$ is a positive value; if the value of the distance is not within the preset range, $r_1$ is a negative value; $r_2$ is the reward and punishment value associated with the boom pose; if the value of the distance is within the preset range and the boom pose is approximately the same as the target pose of the boom, $r_2$ is a positive value; if the value of the distance is within the preset range and the boom pose is not approximately the same as the target pose of the boom, $r_2$ is a negative value; $r_3$ is the reward and punishment value associated with the number of articulating boom sections of the boom; and if the value of the distance is within the preset range and the boom pose is approximately the same as the target pose of the boom, $r_3$ is determined based on the number of articulating boom sections of the boom, and is a positive value.

First, the entire motion-permissible area of the boom is used as a training area for unified training to obtain a trained boom action model. Training results are evaluated to determine whether the precision requirements are met, for example, spatial positioning accuracy in the range of 0.1 to 5 meters. If the training results fail to meet expectations, next training is performed based on the current training outcome by adjusting algorithm parameters and reallocating the training set/testing set, which greatly reduces the time consumed in the initial stage of network training. Meanwhile, considering that the training process has relatively low system resource occupation, the training area can be divided into multiple small areas based on a distance range from the rotation center. During training, the multiple small areas are trained in parallel. After training completed, an area selection strategy can be applied to achieve an effect comparable to that of the unified training, while significantly reducing the size of the training set required for algorithm convergence and shortening the time required for completing a single round of algorithm training.

During training, in order to ensure that the poses computed by the network comply with practical operating conditions of the boom, such as joint limits, as well as the principle of giving priority to the "arched" poses, when optimizing the reward and punishment function of the algorithm, target point poses that approximate an "arched" configuration are recommended while minimizing the number of articulating booms. In order to reduce large-scale movement of the boom, corresponding boom-locking strategies and constraints on the motion-permissible range of the boom are provided. In addition, specific punishment/reward strategies are designed for different boom poses to guide the network training process toward the desired outcomes and derive a recommended boom pose of the device at a target position. In practical implementation, the recommended poses can further be arched, M-shaped, L-shaped, or horizontal poses. The arched, M-shaped, and the L-shaped poses are typically used for boom operations involving high-rise buildings, while the horizontal pose is a boom operation for underground buildings, thereby increasing the applicability of the anti-collision detection method of the present application. In practice, since the arched poses are mostly for boom operations involving high-rise buildings, this embodiment preferably selects the arched pose as the boom operation mode.

Through the above model, a recommended action can be output to guide the boom to reach the recommended pose, and then boom actions are adjusted based on the strategy so that the position and pose of the boom meet the requirements of the LiDAR acquisition area that covers the entire boom space, thereby meeting the need for collecting point cloud data. Furthermore, when there is a risk of collision between the boom and an obstacle, a new recommended action can be output based on the current pose of the boom to make the boom reach the recommended pose, enabling the position and pose of the boom to reach an optimal working condition. At the same time, during subsequent collision detection, the LiDAR acquisition area still covers the entire boom space.

Based on the above, the present application discloses a boom anti-collision detection method, including: obtaining first point cloud data of a surrounding environment of a multi-boom device; detecting an obstacle in the surrounding environment based on the first point cloud data and establishing a first bounding box for the obstacle; performing first collision detection based on the first bounding box and a second bounding box of the boom of the multi-boom device; performing, when the first collision detection result indicates a collision between a first obstacle and a first boom, second collision detection based on point cloud data corresponding to the first obstacle in the first point cloud data within a coordinate system corresponding to the first boom; and generating anti-collision alarm information when the second collision detection indicates that the first obstacle has collided with the first boom; and generating anti-collision alarm information when a result of the second collision detection indicates a collision between the first obstacle and the first boom. The present application can automatically perform collision detection. After performing a primary collision detection based on point cloud data of the surrounding environment, a secondary collision detection is performed based on the point cloud data of obstacles with collisions, so that the detection result is more accurate.

The present application further provides an electronic device, including a processor, a memory, and a computer program stored in the memory and executable by the processor, in which the computer program, when executed by the processor, implements the steps of the method described above.

The present application further provides a computer-readable storage medium, in which the computer-readable storage medium stores a computer program for executing and implementing the steps of any of the methods described above.

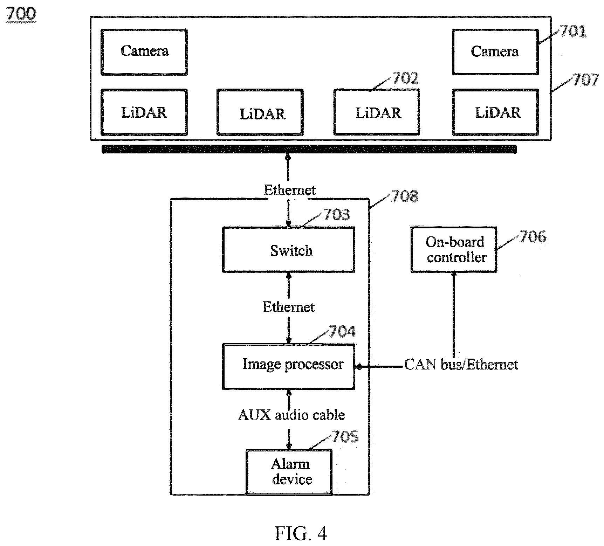

Referring to FIG. 3 and FIG. 4, the present application further provides a multi-boom device 700, including a LiDAR 702 and a controller 706. The LiDAR 702 is configured to collect data for obtaining the first point cloud data, and the controller 706, when executing a computer program, is configured to implement the steps of the method as described in the above embodiment.

The multi-boom device 700 may further include a camera 701, a switch 703, an image processor 704, and an alarm apparatus 705. The camera 701 and the LiDAR 702 are provided on a multi-joint boom 707; the switch 703, the image processor 704, and the alarm apparatus 705 are provided in a cab 708; and the image processor 704 and the controller 706 include a plurality of circuit function modules. The alarm apparatus 705 can be a horn, a buzzer, or a display screen, without limitation to the specific form in the present application.

The above descriptions are merely specific embodiments of the present application and are not intended to limit the scope of protection of the present application. Any modifications or substitutions easily conceivable by those skilled in the art within the scope of the disclosed technical content shall fall within the scope of protection of the present application. Therefore, the scope of protection of the present application shall be defined by the appended claims.

**Claims**

1. A boom anti-collision detection method, applied to a multi-boom device, comprising:

    S1, obtaining first point cloud data of a surrounding environment of the multi-boom device;
    S2, detecting an obstacle in the surrounding environment based on the first point cloud data and establishing a first bounding box for the obstacle;
    S3, performing first collision detection based on the first bounding box and a second bounding box of the boom of the multi-boom device;
    S4, performing second collision detection based on second point cloud data within a coordinate system corresponding to the first boom where a result of the first collision detection indicates a collision between a first obstacle and a first boom, wherein the obstacles in the surrounding environment include the first obstacle, the multi-boom device includes a first boom, and the second point cloud data is the point cloud data corresponding to the first obstacle in the first point cloud data; and
    S5, generating anti-collision alarm information when the second collision detection indicates that the first obstacle has collided with the first boom.

2. The method according to claim 1, wherein, in S4, the performing second collision detection based on the second point cloud data within a coordinate system corresponding to the first boom, the method comprises:

    performing voxel partitioning on a three-dimensional point cloud corresponding to the second point cloud data;
    establishing a plurality of third bounding boxes corresponding to the first obstacle based on the result of the voxel partitioning; and
    performing the second collision detection based on coordinates of the third bounding boxes within the coordinate system corresponding to the first boom.

3. The method according to claim 1, wherein, in S3, the performing first collision detection based on the first bounding box and a second bounding box of the boom of the multi-boom device, the method comprises:
    performing the first collision detection within a coordinate system of the multi-boom device based on the first bounding box and the second bounding box.

4. The method according to claim 1, wherein, after S2, the detecting an obstacle in the surrounding environment based on the first point cloud data and establishing a first bounding box for the obstacle, the method comprises:
    planning an obstacle-avoidance path based on the first bounding box.

5. The method according to claim 1, wherein the second bounding box comprises a first sub-bounding box of a coordinate system corresponding to the multi-boom device and a second sub-bounding box of the coordinate system corresponding to the first boom; and
    in S3, the performing first collision detection based on the first bounding box and a second bounding box of the boom of the multi-boom device, the method comprises:

    determining whether the first bounding box intersects with the first sub-bounding box; wherein if the first bounding box does not intersect with the first sub-bounding box, the result of the first collision detection indicates no collision between the first obstacle and the first boom; and if the first bounding box intersects with the first sub-bounding box, determine whether a collision condition is met based on a distance between the first bounding box and the second sub-bounding box; wherein

if the collision condition is met, a collision between the first obstacle and the first boom is determined, and the result of the first collision detection indicates a collision between the first obstacle and the first boom; and

if the collision condition is not met, the result of the first collision detection indicates no collision between the first obstacle and the first boom.

6. The method according to claim 1, wherein, in S1, the obtaining first point cloud data of a surrounding environment of the multi-boom device, the method comprises:

obtaining point cloud data corresponding to a left side of the boom from LiDAR data as the first point cloud data when the multi-boom device rotates to the left;

obtaining point cloud data corresponding to a right side of the boom from LiDAR data as the first point cloud data when the multi-boom device rotates to the right; and

obtaining point cloud data within a preset range around a central axis of the boom from LiDAR data as the first point cloud data when the multi-boom device undergoes luffing motion.

7. The method according to claim 1, wherein, in S2, the detecting an obstacle in the surrounding environment based on the first point cloud data and establishing a first bounding box for the obstacle, the method comprises:

performing voxel partitioning on the three-dimensional point cloud corresponding to the first point cloud data to establish a plurality of first voxel spaces; and

performing clustering analysis on the point cloud within the first voxel spaces to detect the obstacle in the surrounding environment and determine a first bounding box for the obstacle.

8. An electronic device, comprising a processor, a memory, and a computer program stored in the memory and executable by the processor, wherein the computer program, when executed by the processor, implements the steps of the method according to any one of claims 1 to 7.

9. A multi-boom device, comprising a LiDAR and a controller, wherein the LiDAR is configured to collect data to obtain the first point cloud data, and the controller, when executing a computer program, implements the steps of the method according to any one of claims 1 to 7.

10. A computer-readable storage medium, storing a computer program for executing the method according to any one of claims 1 to 7.

S1

Obtain first point cloud data of a surrounding
environment of a multi-boom device

S2

Detect an obstacle in the surrounding environment according to the first
point cloud data and establish a first bounding box for the obstacle

S3

Perform a first collision detection according to the first bounding box
and a second bounding box of the boom in the multi-boom device

S4

Perform a second collision detection based on second point cloud data in the coordinate system
corresponding to a first boom where a result of the first collision detection indicates a collision
between a first obstacle and a first boom, in which the obstacles in the surrounding environment
include the first obstacle, the multi-boom device includes the first boom, and the second point
cloud data is the point cloud data corresponding to the first obstacle in the first point cloud data

S5

Generate anti-collision alarm information where the second collision detection
result indicates that the first obstacle has collided with the first boom

FIG. 1

Obtain first point cloud data of a surrounding
environment of a multi-boom device

Establish a first bounding box for the obstacle

Establish a second bounding box for
the boom in a multi-boom device

First collision detection

No

Yes

Determine a collision between a
first obstacle and a first boom

Second
sub-bounding
box of the
first boom

Determine a plurality of third bounding boxes
of the first obstacle based on a second point
cloud data corresponding to the first obstacle
in the first point cloud data

Second collision detection

No

Yes

Generate anti-collision alarm information

FIG. 2

700

702

702

701

702

707

701

702

708

FIG. 3

11

700

Camera 701

LiDAR 702

LiDAR

LiDAR

LiDAR

Camera

707

Ethernet

708

Switch 703

On-board controller 706

Ethernet

Image processor 704

CAN bus/Ethernet

AUX audio cable

Alarm device 705

FIG. 4

## INTERNATIONAL SEARCH REPORT

International application No.

**PCT/CN2023/089946**

| A. | CLASSIFICATION OF SUBJECT MATTER |
|---|---|

G01S17/89(2020.01)i; G01S17/93(2020.01)i; G06V20/64(2022.01)i

According to International Patent Classification (IPC) or to both national classification and IPC

| B. | FIELDS SEARCHED |
|---|---|

Minimum documentation searched (classification system followed by classification symbols)

G01S; G06V

Documentation searched other than minimum documentation to the extent that such documents are included in the fields searched

Electronic data base consulted during the international search (name of data base and, where practicable, search terms used)

CNTXT, ENTXTC, CJFD, VEN: 臂架, 多臂, 机械臂, 防撞, 碰撞, 障碍, 包围盒, 包围体, 包围球, 二次检测, 多层次检测, 分级检测, 点云, boom, arm, collision, obstacle, bounding box, bounding volume, surrounding ball, secondary detection, multi-level detection, graded detection, point cloud

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| PX | CN 115932886 A (ZOOMLION HEAVY INDUSTRY SCIENCE&TECHNOLOGY CO., LTD.) 07 April 2023 (2023-04-07)<br>claims 1-10 | 1-10 |
| Y | CN 112720493 A (SHANXI WANLI SCIENCE & TECHNOLOGY CO., LTD. et al.) 30 April 2021 (2021-04-30)<br>description, paragraphs 41-66 | 1-10 |
| Y | 郑晓辉 (ZHENG, Xiaohui). "基于双目立体测距的泵车臂架防碰撞算法 (Anti-collision Algorithm Based on Binocular Stereo Measurement for Pump Truck)"<br>机械工程与自动化 (Mechanical Engineering & Automation),<br>No. 06, 31 December 2016 (2016-12-31),<br>section 3.2 | 1-10 |
| A | CN 112068156 A (SHANGHAI INSTITUTE OF TECHNOLOGY) 11 December 2020 (2020-12-11)<br>entire document | 1-10 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 September 2023** | **14 September 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/089946** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 112508912 A (ZOOMLION HEAVY INDUSTRY SCIENCE&TECHNOLOGY CO., LTD.) 16 March 2021 (2021-03-16)<br>entire document | 1-10 |
| A | CN 114368693 A (ZOOMLION HEAVY INDUSTRY SCIENCE&TECHNOLOGY CO., LTD.) 19 April 2022 (2022-04-19)<br>entire document | 1-10 |
| A | WO 2021175641 A1 (SIEMENS AG) 10 September 2021 (2021-09-10)<br>entire document | 1-10 |

Form PCT/ISA/210 (second sheet) (July 2022)

**INTERNATIONAL SEARCH REPORT**
Information on patent family members

International application No.

**PCT/CN2023/089946**

| Patent document cited in search report | | | Publication date (day/month/year) | Patent family member(s) | | | Publication date (day/month/year) |
|---|---|---|---|---|---|---|---|
| CN | 115932886 | A | 07 April 2023 | None | | | |
| CN | 112720493 | A | 30 April 2021 | None | | | |
| CN | 112068156 | A | 11 December 2020 | None | | | |
| CN | 112508912 | A | 16 March 2021 | None | | | |
| CN | 114368693 | A | 19 April 2022 | None | | | |
| WO | 2021175641 | A1 | 10 September 2021 | EP | 3876025 | A1 | 08 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211607434